# DEMANDE DE BREVET EUROPEEN

(11) **EP 3 216 585 A1**
(43) Date de publication de la demande: **13.09.2017**
(21) Numéro de dépôt: 17159639.8
(22) Date de dépôt: 07.03.2017
(51) Int. Cl.: B29C 63/20

(54) **APPAREIL ET PROCEDE POUR MONTER UN MANCHON EXPANSIBLE AUTOUR D'UN TUBE**

(30) Priorité: 07.03.2016 FR 1651888
(71) Demandeur: Carrieres Industries Services, 50340 Saint Christophe du Foc (FR)
(72) Inventeur: THOMINE, Paul Henri, 50340 Saint Christophe du Foc (FR)
(74) Mandataire: Le Guen-Maillet

(57) **Abrégé**

La présente invention se rapporte à un appareil (100) destiné à monter un manchon (Mn) fabriqué dans un matériau relativement souple autour d'un tube (Tu) fabriqué dans un matériau relativement rigide, la section intérieure du manchon (Mn) étant inférieure à la section extérieure du tube (Tu), l'appareil (100) comprenant un cylindre de manchonnage (Cl, Cl') destiné à réceptionner intérieurement ledit manchon (Mn) pour réaliser son expansion. Selon l'invention, l'appareil (100) comprend un cylindre de coulissement (Cl, Cl2) coaxial au cylindre de manchonnage (Cl, Cl') et dans lequel est monté à coulissement un piston (Pi, Pi2) disposé du coté d'une première extrémité dudit cylindre de coulissement (Cl, Cl2), ledit piston comprenant une première extrémité pourvue d'un moyen pour étanchéifier une première extrémité dudit manchon, la seconde extrémité dudit cylindre de coulissement (Cl, C12) étant pourvue d'un moyen pour étanchéifier une seconde extrémité dudit manchon, la paroi du cylindre de coulissement (Cl, Cl2) étant raccordée à une tubulure (Tb) destinée à être reliée à un moyen d'aspiration (Ma), de sorte que, lorsque le manchon (Mn) à expandre est maintenu par ses deux extrémités contre les deux moyens pour étanchéifier, la dépression créée par le fonctionnement du moyen d'aspiration (Ma) parvient à expandre ledit manchon jusqu'à ce que toute la longueur de sa paroi extérieure vienne en contact avec la paroi intérieure du cylindre de manchonnage (Cl, Cl').

La paroi intérieure du cylindre définit ainsi la section du manchon à l'issue de son expansion. La section du manchon étant augmentée sur toute sa longueur, il est simple d'y insérer rapidement et sans effort un tube à l'intérieur du manchon.

## Description

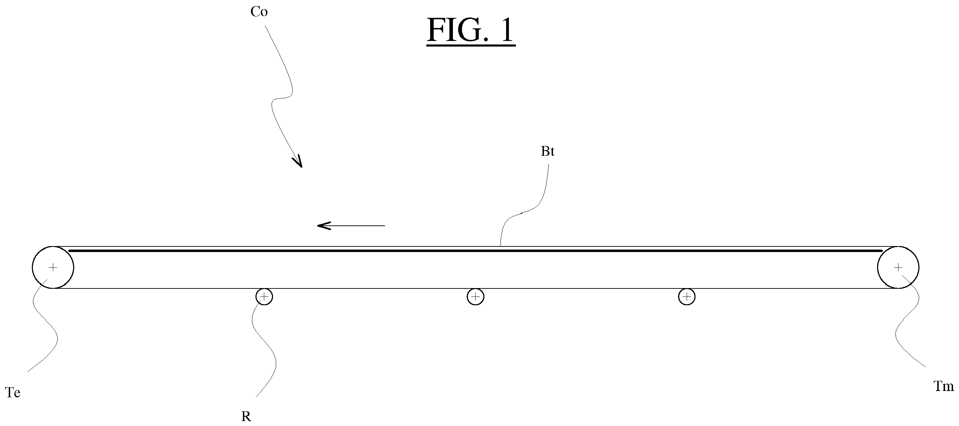

La présente invention concerne un appareil pour manchonner des tubes. Il est connu d'utiliser des tubes manchonnés dans l'industrie. On connaît ainsi, en référence à la Fig. 1, un convoyeur à bande transporteuse Co destiné à transporter du vrac, par exemple du minerai pour charger un bateau et qui comporte au moins un tel tube manchonné.

Le convoyeur Co comprend, dans sa version la plus basique, un tambour d'entraînement Te relié à un moteur d'entraînement à rotation, non représenté, un tambour mené Tm et autour desquels circule en boucle une bande transporteuse Bt. En fonctionnement, le matériau à transporter est déposé et déplacé sur la face extérieure du brin supérieur de la bande transporteuse Bt. Le matériau est déversé à une extrémité du convoyeur, transporté sur la bande transporteuse, puis déversé à l'autre extrémité du convoyeur lors de l'enroulement de la bande transporteuse autour du tambour d'entraînement Te. Pour soutenir et guider le brin inférieur de la bande transporteuse Bt et qui n'est plus tiré par le tambour d'entraînement Te, on utilise au moins un rouleau R, communément appelé rouleau de retour. Il est constitué d'un rouleau de géométrie cylindrique monté libre à rotation autour d'un axe. Il est disposé de manière à être appliqué sur la face extérieure du brin inférieur comme cela apparaît sur cette Fig. 1. Sans la présence de ce rouleau, le brin inférieur circule mal, ce qui provoque l'usure des bords de la bande, des coupures dans le châssis et à terme devient critique en détériorant la bande. Selon la longueur du convoyeur on utilise un ou plusieurs rouleaux de retour.

Il subsiste toujours un peu de matière sur le brin inférieur et sur sa face extérieure. Ces résidus de matière peuvent s'agglomérer autour des rouleaux, par exemple, lorsque le matériau transporté par le convoyeur contient du calcaire. Lorsque le matériau transporté est abrasif, par exemple, contenant de la silice, le rouleau s'use rapidement. Aussi, l'on préfère recouvrir la périphérie du rouleau par un manchon. La présence du manchon évite l'agglomération de résidus autour du rouleau et/ou réduit son usure.

Pour monter ou remplacer une enveloppe extérieure autour d'un tube ou d'un rouleau, on peut utiliser un expanseur de manchon tel que celui qui est présenté dans le brevet US-A-4 979 278. L'expanseur de manchon se compose de deux embouts qui sont enfilés autour des deux extrémités du manchon. L'un des embouts est pourvu d'une admission d'air sous pression. On introduit une extrémité du rouleau à manchonner dans cet embout, puis l'on admet de l'air sous pression dans l'embout, ce qui gonfle le manchon qui s'expand alors et l'on enfonce en même temps le cylindre dans le manchon expansé. A l'issue de son insertion, on débranche l'alimentation en air comprimé et l'on démonte les deux embouts. Compte tenu que les deux extrémités du manchon ne sont pas ou peu expansées car tenues dans les deux embouts, un effort relativement important est nécessaire pour enfoncer le rouleau dans le manchon. Par ailleurs, il faut synchroniser l'enfoncement du cylindre pendant l'admission d'air comprimé dans le manchon, ce qui demande une certaine dextérité.

Une méthode pour recouvrir un cylindre d'un manchon est présentée dans le brevet JP-A-2002067154. On insère le manchon dans un tube. On expand deux ballons toriques dans les deux extrémités du manchon. On crée par aspiration d'air une dépression entre le tube et le manchon. On retire les deux ballons toriques, puis l'on enfile le cylindre dans le manchon expansé. On laisse l'air pénétrer entre le tube et le manchon se rétracte.

Le cylindre est plus facile à monter qu'avec l'expanseur de manchon décrit ci-avant. Cependant, le mode opératoire mis en oeuvre implique une durée relativement longue pour monter un manchon sur un cylindre. Dans la pratique, les deux extrémités du manchon peinent à rester en contact avec le tube et se rétractent.

On connaît encore à la lecture du document US-A-3 010 194, un appareil pour recouvrir des rouleaux avec des tubes flexibles. L'appareil comprend un logement tubulaire allongé pourvu à ses extrémités opposées de deux brides circonférentielles pourvues d'anneaux de serrage des extrémités d'un tube flexible fabriqué en caoutchouc. Le diamètre interne des anneaux de serrage est supérieur au diamètre du rouleau. On enfile un tube flexible dans le logement tubulaire et on emmanche ses deux extrémités sur les deux anneaux. On pince les deux extrémités du tube flexible sur les deux extrémités du logement tubulaire par serrage des deux brides. La paroi du logement tubulaire est raccordée par un piquage à une pompe à vide. Une vanne d'arrêt est raccordée sur le circuit.

En faisant fonctionner la pompe, on dilate le tube flexible contre la face interne du logement tubulaire. On enfile ensuite le rouleau à l'intérieur dudit tube flexible. On arrête le fonctionnement de la pompe et laisse pénétrer de l'air entre le logement tubulaire et le tube flexible qui se rétracte alors autour du rouleau. On débride les deux anneaux et on les retire des deux extrémités du tube flexible. On retire le rouleau manchonné.

Compte tenu de cet état de la technique, le demandeur a cherché une solution pour monter un manchon sur un tube ou sur un rouleau, qui puisse être plus simple et plus rapide à mettre en oeuvre et sans effort.

A cet effet, est proposé un appareil destiné à monter un manchon fabriqué dans un matériau relativement souple autour d'un tube fabriqué dans un matériau relativement rigide, la section intérieure du manchon étant inférieure à la section extérieure du tube, l'appareil comprenant un cylindre de manchonnage destiné à réceptionner intérieurement ledit manchon pour réaliser son expansion; selon l'invention, l'appareil comprend un cylindre de coulissement coaxial au cylindre de manchonnage et dans lequel est monté à coulissement un piston disposé du coté d'une première extrémité dudit cylindre de coulissement, ledit piston comprenant une première extrémité pourvue d'un moyen pour étanchéifier une première extrémité dudit manchon, la seconde extrémité dudit cylindre de coulissement étant pourvue d'un moyen pour étanchéifier une seconde extrémité dudit manchon, la paroi du cylindre de coulissement étant raccordée à une tubulure destinée à être reliée à un moyen d'aspiration, de sorte que, lorsque le manchon à expandre est maintenu par ses deux extrémités contre les deux moyens pour étanchéifier, la dépression créée par le fonctionnement du moyen d'aspiration parvient à expandre ledit manchon jusqu'à ce que toute la longueur de sa paroi extérieure vienne en contact avec la paroi intérieure du cylindre de manchonnage.

La paroi intérieure du cylindre définit ainsi la section du manchon à l'issue de son expansion. La section du manchon étant augmentée sur toute sa longueur, il est simple d'y insérer rapidement et sans effort un tube à l'intérieur du manchon.

Selon une caractéristique additionnelle de l'invention, la seconde extrémité du cylindre de coulissement est pourvue d'un centreur amovible comprenant une paroi tronconique tournée vers l'intérieur du cylindre de coulissement et qui est destinée à être introduite à l'intérieur de la seconde extrémité du manchon pour la circulariser et l'étanchéifier.

Grâce à sa géométrie tronconique, le centreur circularise parfaitement la seconde extrémité du manchon et est en mesure d'étanchéifier cette seconde extrémité du manchon pendant son expansion. Lorsque l'expansion est terminée, on retire le centreur pour enfiler un tube à l'intérieur du manchon expansé depuis sa seconde extrémité.

Selon une caractéristique additionnelle de l'invention, le centreur est monté dans un passage traversant axialement un embout fixé sur ladite seconde extrémité du cylindre de coulissement, ledit passage servant à l'introduction du tube pour l'enfiler à l'intérieur du manchon expansé depuis sa seconde extrémité.

L'embout sert à positionner le centreur axialement dans le cylindre pour qu'il puisse coopérer avec le manchon et permet, en l'absence de centreur, le montage du tube dans le manchon.

Selon une caractéristique additionnelle de l'invention, ladite première extrémité du piston est pourvue d'un centreur comprenant une paroi tronconique tournée vers l'intérieur du cylindre de manchonnage et qui est destinée à être introduite à l'intérieur de la première extrémité du manchon pour la circulariser et l'étanchéifier.

Grâce à sa géométrie tronconique, ce centreur circularise parfaitement la première extrémité du manchon et est en mesure d'étanchéifier cette première extrémité du manchon pendant son expansion.

Selon une caractéristique additionnelle de l'invention, l'appareil comprend un moyen de déplacement du piston à l'intérieur du cylindre de manchonnage.

Ce moyen de déplacement permet de maintenir l'étanchéité au niveau des deux extrémités du manchon pendant son expansion en rapprochant relativement les deux centreurs.

Avantageusement, le moyen de déplacement comprend une tige filetée vissée dans une plaque de liaison solidaire du cylindre de coulissement et dont l'extrémité libre est susceptible de venir en appui ou est tenue libre à rotation sur la seconde extrémité du piston, le piston ressortant au travers de la première extrémité dudit cylindre de coulissement.

En tournant la tige filetée, on peut faire avancer le piston dans le cylindre.

En variante de réalisation, le moyen de déplacement comprend un vérin dont le nez est fixé sur la plaque de liaison et dont la tige prend appui ou est fixée sur la seconde extrémité du piston, le piston ressortant au travers de la première extrémité dudit cylindre de coulissement.

Le fonctionnement du vérin peut avantageusement être automatisé pour qu'il exerce une pression constante sur le piston.

Selon une caractéristique additionnelle de l'invention, un joint annulaire est disposé à la base de la paroi tronconique du centreur fixé sur la première extrémité du piston pour venir en contact avec le bord annulaire de la seconde extrémité du manchon pour parfaire, le cas échéant, l'étanchéité et/ou un joint est fixé sur la face interne de l'embout, autour du passage, pour venir en contact avec le bord annulaire de la seconde extrémité du manchon pour parfaire, le cas échéant, l'étanchéité.

Ce ou ces joints sont susceptibles d'améliorer l'étanchéité pendant l'expansion en diamètre du manchon.

Selon une caractéristique additionnelle de l'invention, une paroi perforée est disposée contre la paroi intérieure du cylindre de manchonnage afin qu'aucune poche d'air ne subsiste entre le manchon expansé et ladite paroi intérieure du cylindre.

La présence de cette paroi perforée qui peut être constituée d'une grille, garantit que le manchon est expansé sur toute sa longueur.

Selon une caractéristique additionnelle de l'invention, le cylindre destiné au manchonnage du manchon et le cylindre dans lequel peut coulisser le piston sont un seul et même cylindre de même section intérieure.

Cet appareil est relativement peut coûteux à fabriquer et convient pour de la grande série.

En variante de réalisation, le cylindrique destiné au manchonnage du manchon est monté de manière coaxiale dans un cylindre plus grand et dans lequel peut coulisser le piston.

On peut remplacer le cylindre de manchonnage par un autre plus petit ou plus grand. Il devient alors possible de manchonner une gamme de rouleaux de différents diamètres, dans le même appareil.

Selon une caractéristique additionnelle de l'invention, le piston est enfermé dans le cylindre de coulissement, la première extrémité dudit cylindre étant fermée, le piston étant dépourvu de moyen mécanique de déplacement, celui-ci étant mis en oeuvre par la dépression régnant dans la chambre aval du cylindre de manchonnage pendant le fonctionnement de l'appareil.

L'appareil est plus court et moins coûteux à fabriquer.

Selon une caractéristique additionnelle de l'invention, le cylindre de manchonnage est formé de plusieurs tronçons aboutés, chaque tronçon étant tenu dans une paire d'anneaux de centrage logés dans la chambre aval du cylindre de coulissement.

De l'air passe entre deux tronçons voisins, afin qu'aucune poche d'air ne subsiste entre ledit manchon expansé et ladite paroi intérieure du cylindre de manchonnage.

Par ailleurs, la présence de ces différents tronçons permet de manchonner des rouleaux de différentes longueurs.

Un procédé pour monter un manchon fabriqué dans un matériau relativement souple autour d'un tube fabriqué dans un matériau relativement rigide fait également partie de l'invention. La section intérieure du manchon est inférieure à la section extérieure du tube, le procédé mettant en oeuvre :
- un cylindre de manchonnage destiné à réceptionner intérieurement ledit manchon pour réaliser son expansion,
- un cylindre de coulissement coaxial au cylindre de manchonnage dans lequel est monté à coulissement un piston disposé du coté d'une première extrémité dudit cylindre de coulissement,
   ledit piston comprenant une première extrémité pourvue d'un moyen pour étanchéifier une première extrémité dudit manchon,
   la seconde extrémité du cylindre de coulissement étant pourvue d'un moyen pour étanchéifier une seconde extrémité dudit manchon, la paroi du cylindre de coulissement étant raccordée à une tubulure destinée à être reliée à un moyen d'aspiration ; le procédé étant caractérisé en qu'il consiste :
- à étanchéifier les deux extrémités du manchon préalablement disposé dans le cylindre de manchonnage entre les deux moyens pour étanchéifier les deux dites extrémités du manchon,
- à créer à l'aide du moyen d'aspiration une dépression dans le cylindre de coulissement et autour du manchon de sorte à expandre ledit manchon jusqu'à ce que toute la longueur de sa paroi extérieure vienne en contact avec la paroi intérieure du cylindre de manchonnage.

Le procédé de manchonnage d'un tube de l'invention est relativement simple et rapide à mettre en oeuvre. Il ne nécessite pas d'effort physique important pour manchonner un tube.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue latérale d'un convoyeur conventionnel pourvu de rouleaux de retour,
la Fig. 2 représente une vue en coupe longitudinale d'un appareil pour monter un manchon sur un tube selon l'invention,
la Fig. 3 représente une vue en coupe longitudinale d'un manchon,
la Fig. 4 représente une vue en coupe longitudinale d'un tube,
la Fig. 5 représente une vue de dessus d'un appareil pour monter un manchon sur un tube selon l'invention,
la Fig. 6 représente une vue schématique en coupe d'un manchon en cours d'expansion suivie d'une étape d'introduction d'un tube à l'intérieur du manchon expansé selon l'invention,
la Fig. 7 représente une vue schématique en coupe d'un manchon en cours de rétreint sur un tube selon l'invention,
la Fig. 8 représente une vue en perspective d'une première variante de réalisation d'un appareil pour monter un manchon sur un tube de section carrée selon l'invention,
la Fig. 9 représente une vue en coupe longitudinale de la variante de réalisation de l'appareil montré sur la Fig. 8,
la Fig. 10 représente une vue en coupe longitudinale d'une seconde variante de réalisation d'un appareil pour monter un manchon sur un tube selon l'invention et,
la Fig. 11 représente un schéma de branchement pneumatique de l'appareil présenté à la Fig. 10 selon l'invention.

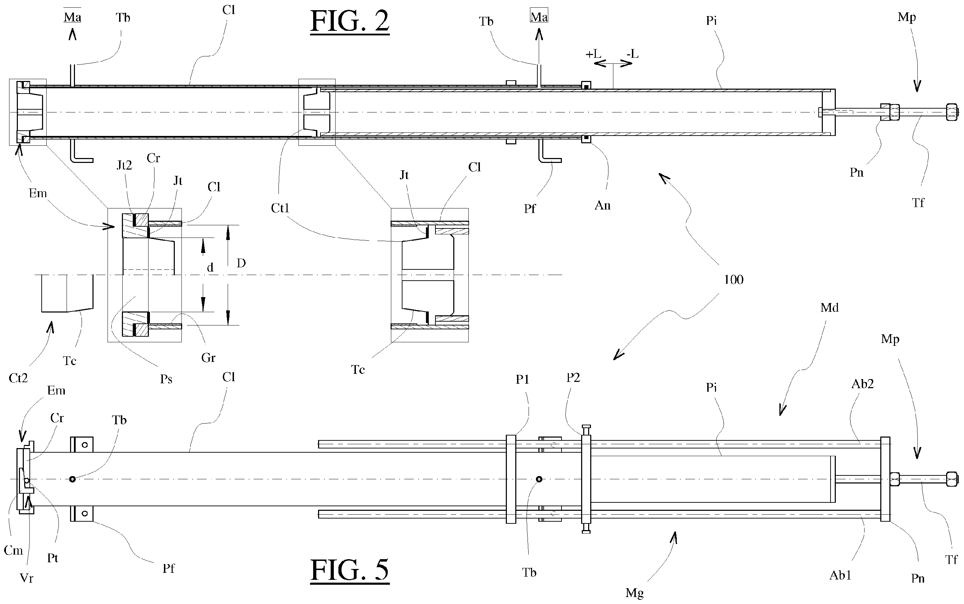

L'appareil 100 présenté sur la Fig. 2 est destiné à réaliser le montage d'un manchon fabriqué dans un matériau relativement souple autour d'un tube relativement rigide.

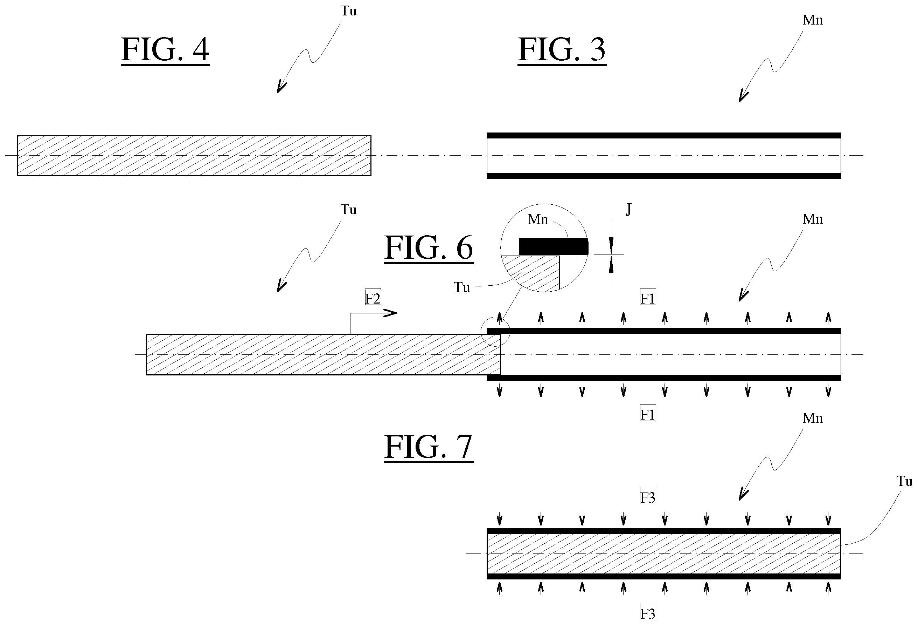

Un manchon Mn est présenté sur la Fig. 3. Il est fabriqué par exemple en caoutchouc. Sa dureté est préférentiellement comprise entre 40 et 70 Shore A. Il présente à l'usage une géométrie cylindrique ou ovale et dont l'épaisseur est pratiquement constante. Il peut être aplati pour faciliter son stockage en réduisant son volume.

Un tube Tu est présenté sur la Fig. 4. Dans l'invention, un tube désigne généralement un cylindre tel qu'un rouleau utilisé dans les convoyeurs de transport conçus pour transporter par exemple, des cailloux, du gravier, des matières pulvérulentes telles que de l'engrais dans les bateaux.

Ce rouleau est traversé par un axe portant des roulements et autour desquels est montée libre à rotation la paroi du cylindre. Sa section extérieure est supérieure à la section intérieure du manchon Mn.

Le terme tube peut encore désigner un élément tubulaire d'axe droit et de section constante, par exemple ovale.

Un cylindre manchonné, c'est-à-dire ceinturé d'un manchon souple, peut être utilisé comme rouleau de retour dans un convoyeur à bande transporteuse.

L'appareil 100 comprend sur la Fig. 2, un cylindre Cl creux intérieurement et dans lequel est monté libre à coulissement un piston Pi.

Le cylindre Cl est formé d'une paroi dont la section intérieure est circulaire ou ovale. Il est délimité par deux extrémités qualifiées de première extrémité et de seconde extrémité. Il est de préférence fabriqué en métal.

Le piston Pi est formé d'un corps plein ou de préférence creux, comme cela apparaît sur cette Fig. 2, dont la section extérieure est circulaire ou ovale. Il est monté au travers de la première extrémité dudit cylindre situé sur la droite de cette Fig. 2, sans toutefois ressortir au travers de sa seconde extrémité.

Un centreur Ct1 est fixé sur une première extrémité du piston Pi qui est logé dans le cylindre Cl. Il est conçu pour être introduit de manière étanche dans une première extrémité d'un manchon. Le centreur Ct1 comprend ainsi une paroi tronconique Tc tournée vers l'intérieur du cylindre Cl et qui est destinée à être introduite dans la première extrémité dudit manchon. Le centreur Ct1 est de préférence fabriqué dans un matériau à faible coefficient de frottement, tel que le polyéthylène haute densité (PEHD).

Un joint annulaire Jt peut prendre place à la base de la paroi tronconique Tc pour venir en contact avec le bord annulaire de la première extrémité dudit manchon pour parfaire, le cas échéant, l'étanchéité.

Un anneau An est fixé sur la première extrémité du cylindre Cl dans lequel un joint est monté intérieurement de sorte à procurer une liaison étanche entre le cylindre Cl et le piston Pi, que celui-ci soit en mouvement ou non.

Un embout Em est monté sur la seconde extrémité du cylindre Cl. Il est traversé axialement d'un passage Ps dont la géométrie permet l'enfilement d'un tube à manchonner à l'intérieur du cylindre Cl. Le passage Ps est de section circulaire sur cette Fig. 2. Le diamètre "d" de ce passage Ps est inférieur au diamètre intérieur "D" de la paroi intérieure du cylindre Cl. L'embout Em est monté sur une collerette Cr solidaire de la seconde extrémité du cylindre Cl. Un joint d'étanchéité Jt2 est interposé entre l'embout Em et ladite collerette pour obtenir une liaison étanche entre le cylindre Cl et l'embout Em.

Un second centreur Ct2 est monté de manière amovible dans le passage Ps. Il est visible, non monté, sur la partie basse de la vue en détail et visible, monté, sur la partie haute de ladite vue en détail. Ce second centreur Ct2 comprend également une paroi tronconique Tc tournée vers l'intérieur du cylindre Cl et qui est destinée à être introduite dans la seconde extrémité dudit manchon. Le centreur Ct2 est de préférence fabriqué dans un matériau à faible coefficient de frottement, tel que le polyéthylène haute densité (PEHD).

Un joint annulaire Jt peut prendre place sur la face interne de l'embout Em, autour du passage Ps, pour venir en contact avec le bord annulaire de la seconde extrémité du manchon. Le second centreur Ct2 est monté dans l'embout Em depuis sa face extérieure afin de pouvoir le retirer sans démonter l'embout Em. La paroi tronconique Tc est prolongée par une paroi cylindrique qui vient prendre place avec un jeu minimum dans le passage Ps de l'embout Em.

Les deux centreurs Ct1 et Ct2 sont de préférence percés axialement pour permettre, le cas échéant, le passage de l'axe du tube destiné à être manchonné.

Un verrou Vr, visible sur la Fig. 5, permet de bloquer en position l'embout Em sur la collerette Cr. Le verrou Vr comprend des pions Pt montés radialement sur la collerette Cr et qui coopèrent respectivement avec des cames Cm montées à la périphérie de l'embout Em. Le blocage de l'embout Em pourvu ou non de son centreur Ct2 est obtenu en l'introduisant dans la collerette Cr et en le tournant. Son démontage est obtenu par le mode opératoire inverse.

Sur cette Fig. 5, l'appareil 100 dispose d'un moyen de déplacement Md du piston Pi dans le cylindre Cl, pour notamment, l'adapter à la longueur d'un manchon qu'il convient de monter sur un tube. Ce moyen de déplacement Md comprend optionnellement un moyen de guidage Mg du piston Pi dans le cylindre Cl ainsi qu'un moyen de poussée Mp. Le moyen de guidage Mg comprend deux arbres Ab1 et Ab2 et chaque arbre est monté à coulissement dans deux paliers P1 et P2 fixés autour du cylindre Cl, d'une plaque de liaison Pn réunissant les deux arbres Ab1 et Ab2 au niveau d'une de leurs extrémités qui s'étend à l'arrière du piston Pi. Un moyen de blocage des arbres dans un palier tel qu'une paire de vis présente sur l'un des paliers et en l'occurrence le palier P2 sur cette Fig. 5 complète le moyen de déplacement Md pour bloquer en une position particulière la plaque de liaison Pn. On peut ainsi positionner et bloquer la position d'enfoncement du piston Pi dans le cylindre Cl.

Le moyen de poussée Mp comprend une tige filetée Tf vissée dans la plaque de liaison Pn qui prend appui par son extrémité libre ou est tenue libre à rotation sur la seconde extrémité du piston Pi. Ainsi, en vissant ou dévissant la tige filetée Tf, on déplace le piston Pi dans le cylindre Cl comme le suggèrent les flèches +L et -L sur la Fig. 2.

En variante de réalisation, non représentée, le moyen de poussée comprend un vérin dont le nez est fixé sur la plaque de liaison dont la tige prend appui ou est fixée sur la seconde extrémité du piston.

Sur la Fig. 5, des pattes de fixation Pf en forme d'équerre sont fixées sur le cylindre Cl pour le fixer sur un support de travail en le déportant de celui-ci.

Au moins une tubulure Tb est raccordée sur la paroi du cylindre Cl. Elle est destinée à être branchée sur un moyen d'aspiration, représenté symboliquement par les flèches Ma sur la Fig. 2, et qui peut comprendre une pompe à vide ou un venturi branché sur un réseau d'air comprimé, plus économique.

Le fonctionnement de l'appareil 100 se présente de la manière suivante, en référence aux Figs. 2 à 7. On règle la position d'insertion du piston Pi dans le cylindre Cl en agissant sur les vis de blocage et/ou le moyen de poussée Mp pour régler l'appareil à la longueur du manchon Mn à manchonner sur un tube Tu. Le bon réglage est obtenu lorsque les deux centreurs Ct peuvent venir s'appliquer sur les embouchures des deux extrémités du manchon Mn. On démonte le cas échéant, l'embout EM.

On insère un manchon Mn préalablement coupé à longueur dans le cylindre Cl et dont sa première extrémité vient s'emboucher sur la paroi tronconique Tc du centreur Ct1. On monte l'embout Em. On monte ensuite le second centreur Ct2 dans l'embout pour appliquer sa paroi tronconique Tc sur la seconde extrémité du manchon Mn.

On actionne le fonctionnement du moyen d'aspiration Ma. La dépression générée dans le cylindre Cl engendre l'expansion en diamètre du manchon Mn alors que ses deux embouchures sont obturées de manière étanche par les parois tronconiques Tc des deux centreurs Ct puis par les joints Jt. La paroi extérieure du manchon Mn s'expand alors jusqu'à venir en contact sur toute sa longueur avec la paroi intérieure du cylindre Cl. L'expansion est indiquée par les flèches F1 sur la Fig. 6.

Afin de favoriser cette expansion de la manière la plus parfaite possible, une paroi perforée telle qu'une grille cylindrique Gr, visible sur la vue de gauche en détail de la Fig. 2, peut être déposée contre la paroi intérieure dudit cylindre afin qu'aucune poche d'air ne subsiste entre le manchon Mn expansé et ladite paroi intérieure du cylindre Cl.

Par ailleurs, il peut s'avérer utile de raccourcir, avec le moyen de poussée Mp, la longueur du manchon Mn qui, lors de son expansion en diamètre, tend à se raccourcir. On peut ainsi visser la tige filetée Tf pour faire avancer le piston Pi pour maintenir étanches les deux extrémités du manchon Mn respectivement dans leurs deux centreurs Ct1 et Ct2 et sur les deux joints Jt. Lorsque le moyen de poussée est un vérin et en particulier un vérin pneumatique, celui-ci peut avantageusement exercer une poussée constante sur le manchon Mn et ceci de manière automatique. La pression de fonctionnement du vérin peut être réglée à l'aide d'un détendeur et d'un régulateur de pression.

On peut encore utiliser la dépression mise en oeuvre par le moyen d'aspiration Ma pour créer une pression négative dans la chambre aval du vérin.

A ce stade, on retire le second centreur Ct2. Il peut être pourvu d'une valve que l'on ouvre pour faire pénétrer de l'air à l'intérieur du cylindre Cl pour faciliter son retrait. On enfile alors simplement le tube Tu dans le passage Ps traversant l'embout Em puis, dans le manchon Mn maintenu expansé. L'insertion du tube Tu est réalisée sans effort car un jeu J subsiste entre le manchon Mn expansé et ledit tube. Le jeu J est visible dans la vue de détail agrandie sur la Fig. 6. L'insertion du tube Tu dans le manchon Mn est indiquée par la flèche F2 sur cette Fig. 6.

Le fonctionnement du moyen d'aspiration Ma est ensuite interrompu ainsi que, le cas échéant, l'alimentation du vérin. De l'air est alors admis entre la paroi extérieure du manchon Mn qui tend à se rétracter et la paroi intérieure du cylindre Cl. Le manchon Mn se rétracte alors et vient épouser intimement la paroi extérieure du tube Tu comme l'indiquent les flèches F3 sur la Fig. 7. On ressort alors le tube manchonné de l'appareil 100.

Une coupe de la partie manchon en débord de la longueur du tube peut être nécessaire.

Il est à noter que le démontage du manchon Mn peut être envisagé en mettant en oeuvre un mode opératoire inverse.

L'appareil pour manchonner des tubes de l'invention permet de monter sans effort et rapidement un manchon autour d'un tube.

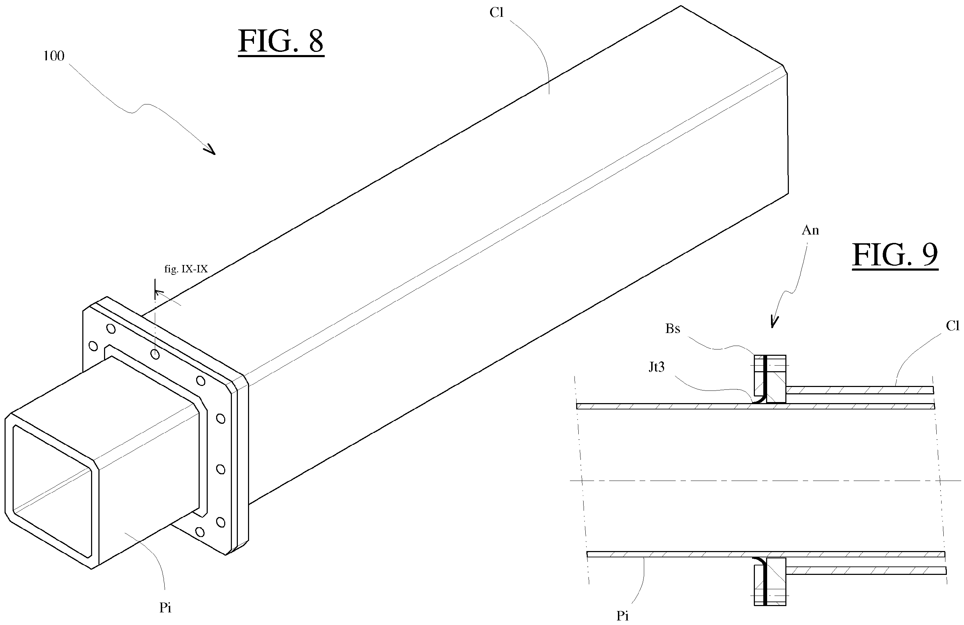

Dans une première variante de réalisation présentée sur la Fig. 8, l'appareil 100 a été aménagé pour manchonner des tubes de section polygonale, par exemple triangulaire, et carrée sur cette Fig. 8. On peut ainsi manchonner des tubes utilisés dans les aires de jeu, par exemple pour la construction de balançoires, de manèges. Les tubes demeurent protégés contre la corrosion et les chocs.

L'appareil 100 comprend un cylindre Cl de section interne carrée et dans lequel est monté à coulissement un piston Pi de section externe carrée. La paroi intérieure du cylindre Cl sert là encore à définir la géométrie du manchon à l'issue de son expansion. Sur la Fig. 9, le joint d'étanchéité Jt3 interposé entre le cylindre Cl et le piston Pi est un joint à lèvre et dont la périphérie est pincée entre l'anneau An et une bague de serrage Bs. La lèvre déformée est appliquée sur la paroi extérieure du piston Pi.

On notera qu'en adaptant la longueur du cylindre et du piston, il est possible de manchonner, sans effort particulier, des tubes de relativement grande longueur, par exemple de l'ordre de 6 m de long.

Dans l'invention décrite jusqu'ici, le cylindre servant à expandre intérieurement le manchon Mn et le cylindre dans lequel coulisse le piston Pi sont un même composant Cl ou pour le moins ont une section intérieure identique.

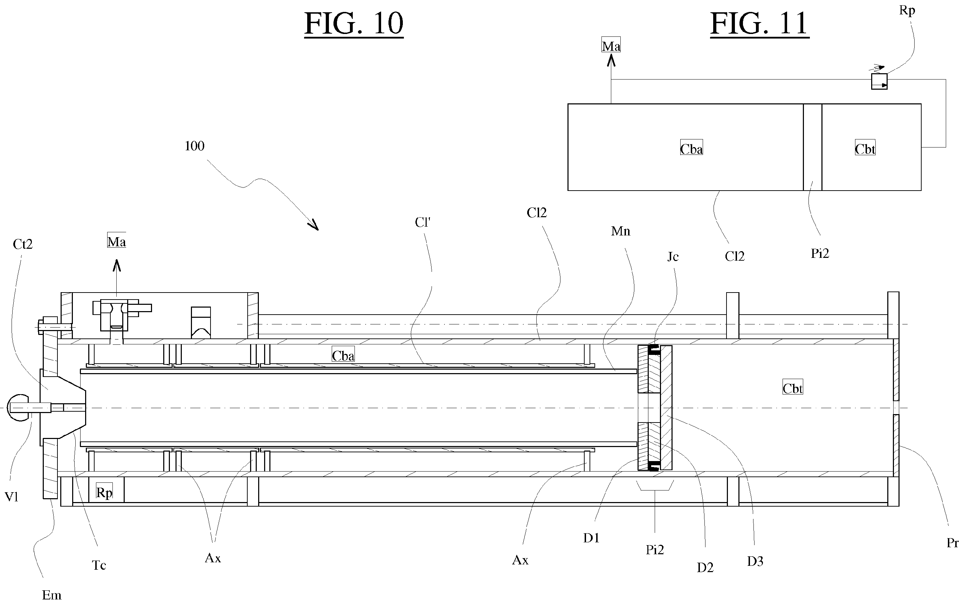

Dans la seconde variante de réalisation de l'appareil 100 présentée sur la Fig. 10, le cylindre Cl' destiné à mettre en oeuvre l'expansion du manchon Mn est monté de manière amovible et coaxiale dans un second cylindre Cl2 plus gros, par l'intermédiaire d'anneaux de centrage Ax. Ainsi en remplaçant les anneaux Ax et le cylindre Cl' par un autre plus petit ou plus grand, il devient possible de manchonner une gamme de rouleaux de différents diamètres, dans le même appareil.

Le piston Pi2 est, là encore, monté libre à coulissement dans le cylindre Cl2 de l'appareil 100.

Par ailleurs, et dans cette variante de réalisation, le piston Pi2 est nettement plus court. Il demeure toujours à l'intérieur dudit cylindre de coulissement Cl2 pendant le fonctionnement de l'appareil 100. L'extrémité du cylindre Cl2 qui est opposée au centreur Ct2 est obturée par une plaque de fermeture Pr.

Dans cette seconde variante de réalisation, on utilise la dépression dans le cylindre de coulissement Cl2 pour faire avancer le piston Pi2 dans ledit cylindre. La présence du joint d'étanchéité entre le cylindre Cl2 et le piston Pi2 est alors indispensable. Dans ce cas il n'est plus nécessaire d'utiliser un vérin ou une tige filetée.

Le piston Pi2 dispose à sa périphérie d'un joint circulaire Jc destiné à lui procurer une étanchéité avec la face interne du cylindre Cl2. La partie du piston Pi2 tournée vers le centreur Ct2 est creusée en son centre pour loger, le cas échéant, une extrémité de l'axe du tube destiné à être manchonné. Le piston Pi2 peut être construit en une structure monobloc ou être construit par un assemblage de plusieurs composants, comme cela apparaît sur cette Fig. 10. Il se compose ainsi sur cette Fig. 10, de trois disques accolés D1, D2 et D3, assemblés par collage, par vissage, le disque intermédiaire D2 étant d'un diamètre plus faible que les deux autres et autour duquel prend place le joint Jc et qui demeure calé latéralement entre les deux autres disques D1 et D3. Les deux disques D1, D2, tournés vers le second centreur Ct2 sont percés en leur centre pour loger une extrémité de l'axe du tube destiné à être manchonné. Le disque D1 tourné vers le second centreur Ct2 est destiné à procurer une étanchéité avec la première extrémité du manchon Mn. Il peut être fabriqué en polyéthylène haute densité (PEHD) ou en polychlorure de vinyle (PVC).

Le moyen de poussée du piston Pi2 sur la première extrémité du manchon Mn n'est pas un accessoire rapporté comme décrit précédemment, c'est-à-dire, ni une tige filetée, ni un vérin, mais l'effet de la dépression engendrée dans le cylindre Cl2 pour expandre le manchon Mn dans le cylindre de manchonnage Cl'. En effet, cette dépression qui règne pendant le fonctionnement du moyen d'aspiration Ma, dans la partie gauche du cylindre Cl2 sur cette Fig. 10, qui est appelée chambre aval Cba, exerce une force qui tire le piston Pi2 en direction de la première extrémité du manchon Mn.

Le fonctionnement de l'appareil de cette seconde variante de réalisation se présente de la manière suivante :
On insère un manchon Mn préalablement coupé à longueur dans le cylindre de manchonnage Cl'. On monte l'embout Em. On monte ensuite le centreur Ct2 dans l'embout pour loger sa paroi tronconique Tc dans la seconde extrémité du manchon Mn.

On actionne le fonctionnement du moyen d'aspiration Ma. La dépression générée dans la chambre aval Cba du cylindre de coulissement Cl2 déplace le piston Pi2 sur la première extrémité du manchon Mn. Celui-ci se déplace alors et vient s'emboucher hermétiquement sur la paroi tronconique Tc du centreur Ct2. Les deux extrémités du manchon Mn étant obturées, la dépression générée dans la chambre aval Cba engendre l'expansion en diamètre du manchon Mn. La paroi extérieure du manchon Mn s'expand alors jusqu'à venir en contact sur toute sa longueur avec la paroi intérieure du cylindre de manchonnage Cl'. L'expansion est indiquée par les flèches F1 sur la Fig. 6.

Afin de favoriser cette expansion de la manière la plus parfaite possible, le cylindre de manchonnage Cl' est composé de plusieurs tronçons espacés d'une faible distance, créée par exemple, d'un interstice, ce qui laisse ainsi échapper l'air entre le manchon Mn et le cylindre de manchonnage Cl'. Chaque tronçon est tenu dans une paire d'anneaux Ax de centrage logés dans la chambre aval Cba du cylindre Cl2 afin qu'aucune poche d'air ne subsiste entre ledit manchon expansé et ladite paroi intérieure du cylindre de manchonnage Cl'.

On remarquera que le simple fait d'abouter les tronçons suffit, de sorte qu'un interstice subsiste entre eux, pour qu'ils ne soient pas parfaitement jointifs.

Par ailleurs, la présence de ces différents tronçons permet de manchonner des rouleaux de différentes longueurs.

Pour éviter que le piston n'exerce une force trop grande sur le manchon Mn tenu par ses deux extrémités pour éviter de l'abîmer, une dépression peut être appliquée dans la chambre amont Cbt du cylindre C12. Sur la Fig. 11, cette dépression est préférentiellement mise en oeuvre par un régulateur de pression Rp branché en dérivation sur le moyen d'aspiration qui est raccordé dans la chambre amont Cbt du cylindre C12.

A l'aide d'une valve V1 présente sur le centreur Ct2, on laisse pénétrer de l'air dans la chambre aval Cba, on retire le dit centreur et on introduit le tube dans le passage intérieur de l'embout puis, dans le manchon Mn maintenu expansé.

Le fonctionnement du moyen d'aspiration Ma est ensuite interrompu. De l'air est alors admis entre la paroi extérieure du manchon Mn qui tend à se rétracter et la paroi intérieure du cylindre Cl'. Le manchon Mn se rétracte alors et vient épouser intimement la paroi extérieure du tube. On ressort alors le tube manchonné de l'appareil 100.

## Revendications

1. Appareil (100) destiné à monter un manchon (Mn) fabriqué dans un matériau relativement souple autour d'un tube (Tu) fabriqué dans un matériau relativement rigide, la section intérieure du manchon (Mn) étant inférieure à la section extérieure du tube (Tu), l'appareil (100) comprenant un cylindre de manchonnage (Cl, Cl') destiné à réceptionner intérieurement ledit manchon (Mn) pour réaliser son expansion, **caractérisé en ce qu'**il comprend un cylindre de coulissement (Cl, Cl2) coaxial au cylindre de manchonnage (Cl, Cl') et dans lequel est monté à coulissement un piston (Pi, Pi2) disposé du coté d'une première extrémité dudit cylindre de coulissement (Cl, Cl2), ledit piston comprenant une première extrémité pourvue d'un moyen pour étanchéifier une première extrémité dudit manchon, la seconde extrémité dudit cylindre de coulissement (Cl, Cl2) étant pourvue d'un moyen pour étanchéifier une seconde extrémité dudit manchon, la paroi du cylindre de coulissement (Cl, Cl2) étant raccordée à une tubulure (Tb) destinée à être reliée à un moyen d'aspiration (Ma), de sorte que, lorsque le manchon (Mn) à expandre est maintenu par ses deux extrémités contre les deux moyens pour étanchéifier, la dépression créée par le fonctionnement du moyen d'aspiration (Ma) parvient à expandre ledit manchon jusqu'à ce que toute la longueur de sa paroi extérieure vienne en contact avec la paroi intérieure du cylindre de manchonnage (Cl, Cl').

2. Appareil (100) selon la revendication 1, **caractérisé en ce que** la seconde extrémité du cylindre de coulissement (Cl, Cl2) est pourvue d'un centreur (Ct2) amovible comprenant une paroi tronconique (Tc) tournée vers l'intérieur du cylindre de coulissement (Cl, Cl2) et qui est destinée à être introduite à l'intérieur de la seconde extrémité du manchon (Mn) pour la circulariser et l'étanchéifier.

3. Appareil (100) selon la revendication 2, **caractérisé en ce que** le centreur (Ct2) est monté dans un passage (Ps) traversant axialement un embout (Em) fixé sur ladite seconde extrémité du cylindre de coulissement (Cl, Cl2), ledit passage servant à l'introduction du tube (Tu) pour l'enfiler à l'intérieur du manchon expansé depuis sa seconde extrémité.

4. Appareil (100) selon l'une quelconque des revendications précédentes, **caractérisé en ce que** ladite première extrémité du piston (Pi) est pourvue d'un centreur (Ct1) comprenant une paroi tronconique (Tc) tournée vers l'intérieur du cylindre de manchonnage (Cl, Cl') et qui est destinée à être introduite à l'intérieur de la première extrémité du manchon (Mn) pour la circulariser et l'étanchéifier.

5. Appareil (100) selon la revendication 4, **caractérisé en ce qu'**il comprend un moyen de déplacement (Md) du piston (Pi) à l'intérieur du cylindre de manchonnage (Cl, Cl').

6. Appareil (100) selon la revendication 5, **caractérisé en ce que** le moyen de déplacement (Md) comprend une tige filetée (Tf) vissée dans une plaque de liaison (Pn) solidaire du cylindre de coulissement (Cl) dont l'extrémité libre est susceptible de venir en appui ou est tenue libre à rotation sur la seconde extrémité du piston (Pi), le piston (Pi) ressortant au travers de la première extrémité dudit cylindre de coulissement (Cl).

7. Appareil (100) selon la revendication 5, **caractérisé en ce que** le moyen de déplacement (Md) comprend un vérin dont le nez est fixé sur la plaque de liaison dont la tige prend appui ou est fixée sur la seconde extrémité du piston, le piston (Pi) ressortant au travers de la première extrémité dudit cylindre de coulissement (Cl).

8. Appareil (100) selon la revendication 3 à 7, **caractérisé en ce qu'**un joint annulaire (Jt) est disposé à la base de la paroi tronconique (Tc) du centreur (Ct1) fixé sur la première extrémité du piston (Pi) pour venir en contact avec le bord annulaire de la seconde extrémité du manchon pour parfaire, le cas échéant, l'étanchéité et/ou un joint (Jt) est fixé sur la face interne de l'embout (Em), autour du passage (Ps), pour venir en contact avec le bord annulaire de la seconde extrémité du manchon pour parfaire, le cas échéant, l'étanchéité.

9. Appareil (100) selon l'une quelconque des revendications précédentes, **caractérisé en ce qu'**une paroi perforée est disposée contre la paroi intérieure du cylindre de manchonnage (Cl) afin qu'aucune poche d'air ne subsiste entre le manchon (Mn) expansé et ladite paroi intérieure du cylindre.

10. Appareil (100) selon l'une quelconque des revendications précédentes, **caractérisé en ce que** le cylindre (Cl) destiné au manchonnage du manchon (Mn) et le cylindre (Cl) dans lequel peut coulisser le piston (Pi) sont un seul et même cylindre de même section intérieure.

11. Appareil (100) selon l'une quelconque des revendications 1 à 9, **caractérisé en ce que** le cylindrique (Cl') destiné au manchonnage du manchon (Mn) est monté de manière coaxiale dans un cylindre (C12) plus grand et dans lequel peut coulisser le piston (Pi2).

12. Appareil (100) selon l'une quelconque des revendications 1 à 4 et 9 à 11, **caractérisé en ce que** le piston (Pi2) est enfermé dans le cylindre de coulissement (Cl2), la première extrémité dudit cylindre étant fermée, le piston (Pi2) étant dépourvu de moyen mécanique de déplacement, celui-ci étant mis en oeuvre par la dépression régnant dans la chambre aval (Cba) du cylindre de manchonnage (Cl, Cl') pendant le fonctionnement de l'appareil.

13. Appareil (100) selon la revendication 12, **caractérisé en ce que** le cylindre de manchonnage (Cl, Cl') est formé de plusieurs tronçons aboutés, chaque tronçon étant tenu dans une paire d'anneaux (Ax) de centrage logés dans la chambre aval (Cba) du cylindre (Cl2) de coulissement.

14. Procédé pour monter un manchon (Mn) fabriqué dans un matériau relativement souple autour d'un tube (Tu) fabriqué dans un matériau relativement rigide, la section intérieure du manchon (Mn) étant inférieure à la section extérieure du tube (Tu), le procédé mettant en oeuvre :
- un cylindre de manchonnage (Cl, Cl') destiné à réceptionner intérieurement ledit manchon (Mn) pour réaliser son expansion,
- un cylindre de coulissement (Cl, Cl2) coaxial au cylindre de manchonnage (Cl, Cl') et dans lequel est monté à coulissement un piston (Pi, Pi2) disposé du coté d'une première extrémité dudit cylindre de coulissement (Cl, Cl2),
ledit piston comprenant une première extrémité pourvue d'un moyen pour étanchéifier une première extrémité dudit manchon,
la seconde extrémité du cylindre de coulissement (Cl, Cl2) étant pourvue d'un moyen pour étanchéifier une seconde extrémité dudit manchon, la paroi du cylindre de coulissement (Cl, Cl2) étant raccordée à une tubulure (Tb) destinée à être reliée à un moyen d'aspiration (Ma), **caractérisé en ce qu'**il consiste :
- à étanchéifier les deux extrémités du manchon (Mn) préalablement disposé dans le cylindre de manchonnage (Cl, Cl') entre les deux moyens pour étanchéifier les deux dites extrémités du manchon,
- à créer à l'aide du moyen d'aspiration (Ma), une dépression dans le cylindre de coulissement (Cl, Cl2) et autour du manchon (Mn) de sorte à expandre ledit manchon jusqu'à ce que toute la longueur de sa paroi extérieure vienne en contact avec la paroi intérieure du cylindre (Cl) de manchonnage (Cl, Cl').
